# EUROPÄISCHE PATENTSCHRIFT

(11) **EP 1 279 981 B1**
(45) Veröffentlichungstag und Bekanntmachung des Hinweises auf die Patenterteilung: **29.06.2005**
(21) Anmeldenummer: 02015226.0
(22) Anmeldetag: 09.07.2002
(51) Int. Cl.: G02B 6/38

(54) **Druckausgeglichener Lichtwellenleitersteckverbinder**
Pressure compensated lightguide plug connector
Connecteur enfichable pour guides d'ondes de lumière à compensation de pression

(30) Priorität: 26.07.2001 DE 20112119 U
(43) Veröffentlichungstag der Anmeldung: 29.01.2003
(73) Patentinhaber: Gisma Steckverbinder GmbH, 24539 Neumünster (DE)
(72) Erfinder: Hirsch,Oliver, 24539 Neumünster (DE); Maletzky,Manfred, 24539 Neumünster (DE)
(74) Vertreter: Biehl, Christian, Dipl.-Phys.

(56) Entgegenhaltungen:
- EP-A- 0 902 505

## Beschreibung

Die Erfindung betrifft einen Lichtwellenleiter(LWL)-Steckverbinder mit den Merkmalen des Oberbegriffs des Hauptanspruchs.

LWL-Steckverbinder sind an sich bekannt, sie finden zur Herstellung einer optischen Steckverbindung unter Wasser Verwendung.

Aus der EP 0 902 505 sind beispielsweise solche fed verbinder bekannt: Die Steckverbinder haben eine Aufnahme / Steckbuchse für einen Steckerstift, wobei die Aufnahme / Buchse in einem mit Flüssigkeit gefüllten Innenraum eines Gehäuses angebracht ist.

Der Innenraum steht über flexible Membranen und Gehäuse öffnungen mit dem Außenraum und einem Außenraum des Steckergehäuses in Verbindung um einen Druckausgleich zu gewähren. Die Stiftaufnahme ist im unbenutzten Zustand durch eine in ihrem Inneren angebrachten und mittels einer Feder vorgespannten Gleitkolben und an der Aufnahmeneintrittsöffnung befindlichen Dichtlippen/ringen abgedichtet. An der Einführöffnung der Steckeraufnahme sind zudem Flüssigkeitsreservoirs angebracht durch die die Steckerstiftspitze beim Einführen hindurchgeführt und mit Flüssigkeit benetzt wird. Diese Flüssigkeit wird dann beim Durchgang durch weitere Dichtlippen wieder abgewischt, und nimmt eventuell vorhandene Verschmutzunger und Anhaftungen mit sich.

Ein anderes System ist aus der GB 2 342 461 bekannt. Dieses System weist eine Steckerbuchse mit Gehäuse auf bei dem die Steckerbuchse Ein- und Austrittsöffnungen sowie ein Fillersystem für eine in das Gehäuse einströmende Flüssigkeit aufweist.

Beim Einstecken eines Steckerstiftes in die Buchse wird ein Flüssigkeitsstrom erzeugt, der an der Steckerstiftspitze entlang strömt und diese von Anhaftungen befreit.

Ein anderes Steckersystem mit Ein- und Ausstrittsventilen für eine Flüssigkeit an einer Steckerbuchse und einem in der Steckerbuchsemittels einer Feder vorgespannten Gleitkolbens zur Abdichtung der Büchse ist aus der WO 01/91 244 bekannt.

Bei derartigen unter Wasser zu steckenden LWL-Steckverbindern stellt sich das Problem, daß bei dem Stecken ein an dem LWL-Kontaktstift anhaftender Wasserfilm in das Buchsenteil eingeschleppt wird.

Der Erfindung liegt die Aufgabe zugrunde, einen LWL-Steckverbinder der eingangs genannten Art zu schaffen, bei dem eine Verschlechterung des Kontakts der Lichtwellenleiter durch eingetragenes Wasser oder Verunreinigungen praktisch ausgeschlossen ist.

Erfindungsgemäß wird diese Aufgabe dadurch die Merkmale des Anspruchs 1 gelöst. Die Unteransprüche geben vorteilhafte Ausgestaltungen der Erfindung an.

Grundgedanke der Erfindung ist die Ausgestaltung des Steckverbinders derart, daß bei dem Stecken eine Spü-lung des LWL-Kontaktstifts erfolgt, wobei die trotz der Dichtung eingetretenen Verunreinigungen abgeführt werden. Das Nachrücken frischen Öls stellt einen zuverlässige LWL-Kontakt auch nach mehrfachem Ein- und Ausstecken sicher.

Die Erfindung wird im folgenden anhand einer Zeichnung erläutert. Dabei zeigt:
- Fig. 1: eine Schnittdarstellung durch ein Buchsenteil eines solchen LWL-Steckverbinders,
- Fig. 2: eine isolierte Darstellung einer LWL-Kontaktbuchse, und
- Fig. 3: eine Fig. 2 entsprechende Darstellung, bei der ein LWL-Kontaktstift in die LWL-Kontaktbuchse eingebracht ist.

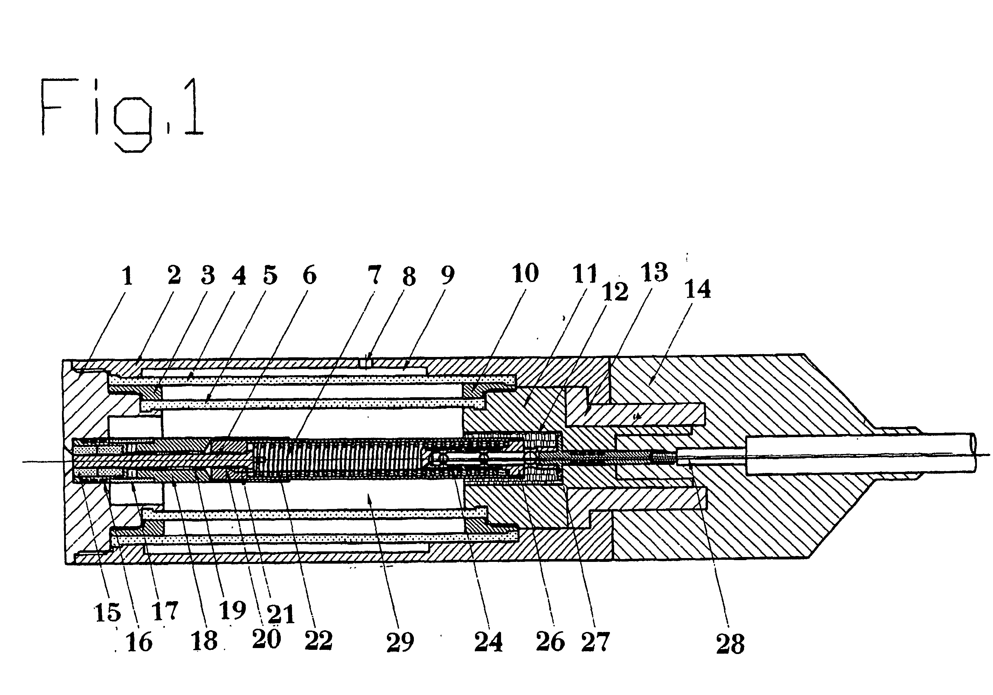

Das in Figur 1 gezeigte Buchsenteil eines LWL-Steckverbinders weist ein Gehäuse 2 auf, dessen Stirnfläche von einer Frontplatte 1 verschlossen ist. In dem Gehäuse ist eine LWL-Kontaktbuchse 7 angeordnet (in der Praxis werden eine Mehrzahl solcher LWL-Kontaktbuchsen 7 vorgesehen sein), die mit einer Öffnung in der Platte 1 fluchtet, die zum Einführen des LWL-Kontaktstifts des zugehörigen Steckteils dient. Um die LWL-Kontaktbuchse 7 herum ist ein Innenraum 29 gebildet, der mit einem Fluid - insbesondere einem Öl - gefüllt ist. Zwei Membranen 5, 4, die von einem vorderen Membranbefestigungsring 3 und einem hinteren Membranbefestigungsring 10 gehalten werden und zwischen denen ein Zwischenraum ausgebildet ist, schließen sich nach außen an. Zwischen dem Gehäuse 2 und der äußeren Membran 4 ist ein Außenraum 9 gebildet, der über eine Druckausgleichsbohrung 8 mit dem Umgebungswasser kommuniziert. Der von Platte 1 abgewandte Teil des Buchsenteiles wird durch eine hintere LWL-Kontaktaufnahme 11, eine Vergußaufnahme 13 und einen Verguß 14 gebildet.

Die LWL-Kontaktbuchse 7, von der bei dem in Fig. 1 dargestellten Ausführungsbeispiel lediglich eine vorhanden ist, in der Praxis aber eine Vielzahl vorgesehen sein werden, ist in Form einer zylinderischen Hülse ausgebildet. Diese besteht aus einer Dichtungshülse 15, die mit einer O-Ring-Kontur ausgebildet ist, O-Ringdichtungen 16, einem Auslaßventil 17, einer vorderen LWL-Kontaktaufnahme 18, einem vorderen LWL-Kontakt 21, einem Einlaßventil 24, das im hinteren Bereich der LWL-Kontaktbuchse 7 angeordnet sind, einem hinteren LWL-Kontaktträger 26, einem Ferroulenträger 27 und einer LWL-Faser 28.

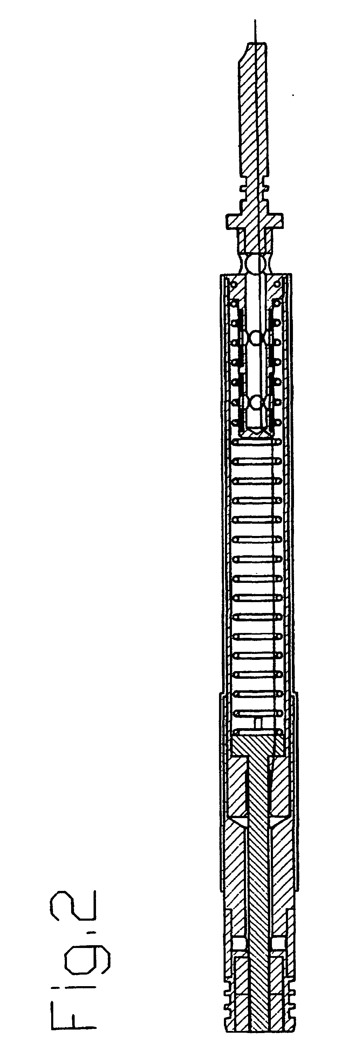

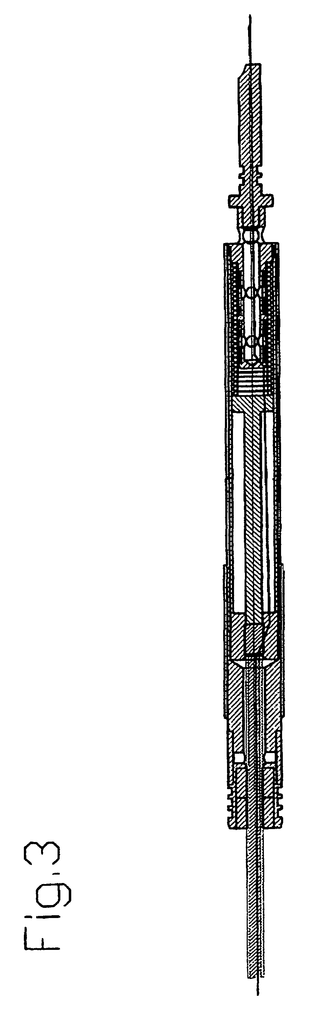

In die LWL-Kontaktbuchse 7 ist eine Druckfeder 22 eingesetzt, die auf einen Gleitkolben 6 wirkt, der in den zylindrischen Innenraum, der durch die Dichtungshülse 15, die vordere LWL-Kontaktaufnahme 18 und den LWL-Kontakt 21 gebildet ist, zwischen der in Fig. 2 dargestellten Position und der in Fig. 3 dargestellten Position verschiebbar angeordnet ist.

Der Innendurchmesser der Dichtungshülse 15 entspricht dabei dem Durchmesser des Gleitkolbens 6 (und des mit diesem übereinstimmenden Durchmessers des LWL-Kontaktstifts des Steckteils des Steckverbinders). Der Innendurchmesser der vorderen LWL-Kontaktaufnahme 18 ist dagegen größer als der Durchmesser des Gleitkolbens 6, so daß zwischen dem Schaft des Gleitkolbens 6 und der vorderen LWL-Kontaktaufnahme 18 ein Ringraum gebildet ist.

Wenn zum Herstellen einer Steckverbindung ein LWL-Kontaktstift des Steckteiles an die Öffnung in der Frontplatte 1 angesetzt wird, wobei seine Stirnfläche gegen die nach außen weisende Stirnfläche des Gleitkolbens 6 anliegt und der LWL-Kontaktstift sodann in die LWL-Kontaktbuchse 7 eingedrückt wird, wird der Gleitkolben 6 in den Raum der LWL-Kontaktbuchse 7 von dem LWL-Kontaktstift gefolgt eindringen. Der Gleitkolben 6 verdrängt dabei Öl aus dem mit Öl gefüllten Raum der LWL-Kontaktbuchse 7, das durch den Ringraum 19 an dem Schaft des Gleitkolbens vorbei gegen die Bewegungsrichtung des Gleitkolbens strömt. Bei diesem Vorgang wird das sich im Kontaktbereich befindende Öl ausgetauscht, Verunreinigungen werden durch das Ventil 17 in den Raum 29 gespült.

Wenn das vordere Ende des LWL-Kontaktstifts die Dichtungshülse 15 passiert hat, strömt das von dem Gleitkolben 6 aus dem Raum der LWL-Kontaktbuchse 7 verdrängte Öl längs des LWL-Kontaktstifts, so daß der auf dem LWL-Kontaktstift aufliegende Wasserfilm (oder eine Verunreinigung) von dem Öl abgespült wird. Das Öl wird unter Mitnahme des von dem LWL-Kontaktstift abgestreiften Wassers sodann in den Innenraum 29, der die LWL-Kontaktbuchse 7 umgibt, durch das Ventil 17 hindurch aus der LWL-Kontaktbuchse 7 austreten. Auf diese Weise ist zuverlässig verhindert, daß Wasser (oder Verunreinigungen) in den Bereich der LWL-Kontakte 20 gelangt.

Die Membran 5 ist dabei so ausgelegt, daß der Innenraum 29 eine zusätzliche Menge an Fluid aufnehmen kann, das dem Volumen des in die LWL-Kontaktbuchse eindringenden LWL-Kontaktstifts entspricht.

Bei dem Lösen der Steckverbindung, also dem Herausziehen des LWL-Kontaktstifts, drückt die Druckfeder 22 den Gleitkolben 6 wieder in die in Fig. 2 gezeigte Position zurück. Bei diesem Vorgang öffnet das Ventil 24, so daß Öl aus dem Innenraum 29 durch den Filter 12 hindurch in den Raum der LWL-Kontaktbuchse 7 nachströmt.

Der Innenraum 29 kann zusätzlich zum Fluid ein hydrophiles Material aufnehmen, das in den Innenraum 29 eingetragenes Wasser zurückhält, also auch nach vielen Steckvorgängen das Wiedereintragen von Wasser in den Raum der LWL-Kontaktbuchse 7 verhindert.

## Patentansprüche

1. Lichtwellenleiter(LWL)-Steckverbinder mit einem Steckteil, das mit wenigstens einem LWL-Kontaktstift versehen ist, und einem LWL-Buchsenteil, das mit einem eine der Anzahl der LWL-Kontaktstifte des Steckteils entsprechenden Anzahl von LWL-Kontaktbuchsen versehenem (7) aufnehmenden Gehäuse (2) und einer der Anzahl von LWL-Kontaktbuchsen (7) entsprechenden, mit diesen fluchtenden Öffnungen ausgebildeten Frontplatte (1) versehen ist, wobei
- das Gehäuse (2) wenigstens eine einen Druckausgleich zwischen dem Innenraum des Gehäuses (2) und der Umgebung bewirkenden Druckausgleichsbohrung (8) und eine einen mit der Druckausgleichsbohrung (8) kommunizierenden Außenraum (9) von einem die LWL-Kontaktbuchsen (7) umgebenden, mit einem Fluid gefüllten Innenraum (29) abgrenzenden Membran (5) aufweist und
- die LWL-Kontaktbuchsen (7) eine der Öffnung benachbart angeordnete Dichtungshülse (15), einen vorderen Kontakt (21), einen in diesem verschiebbaren Gleitkolben (18), dessen Durchmesser dem des LWL-Kontaktstifts entspricht, und einer den Gleitkolben (18) in Richtung auf die Öffnung belastende Feder (22) aufweisen,
**dadurch gekennzeichnet, daß**
die LWL-Kontaktbuchsen (7)
- mit einem im Bereich zwischen der Dichtungshülse (15) und dem vorderen LWL-Kontakt (21) angeordneten, den im nicht gesteckten Zustand von dem Gleitkolben (6) belegten Raum mit dem Innenraum (29) verbindenden, sich bei Einbringen des LWL-Kontaktstifts in die LWL-Kontaktbuchse (7) zu dem Innenraum (29) öffnenden Austrittsventil (17) und
- mit einem im von der Öffnung beabstandeten Bereich angeordneten, den Innenraum (29) mit dem Raum der LWL-Kontaktbuchse (7) verbindenden, sich bei Herausziehen des LWL-Kontaktstifts aus der LWL-Kontaktbuchse (7) zu dem Innenraum (29) öffnenden Eintrittsventil (24, 25)
versehen sind.

2. Lichtwellenleiter-Steckverbinder nach Anspruch 1, **dadurch gekennzeichnet, daß** die LWL-Kontaktbuchsen (7) mit einer zwischen dem Austrittsventil (17) und dem vorderen LWL-Kontaktträger (21) angeordneten vorderen LWL-Kontaktaufnahmehülse (18) versehen sind, die zwischen sich und dem Gleitkolben (6) einen Spülringraum (19) belassen.

3. Lichtwellenleiter-Steckverbinder nach Anspruch 1 oder 2, **gekennzeichnet durch** ein in dem Weg zwischen dem Innenraum (29) und dem Eintrittsventil (24, 25) angeordnetes Separationssystem zur Separation des Fluids von anderem Material.

4. Lichtwellenleiter-Steckverbinder nach Anspruch 3, **dadurch gekennzeichnet, daß** das Separationssystem ein Filter ist.

5. Lichtwellenleiter-Steckverbinder nach Anspruch 3, **dadurch gekennzeichnet, daß** in den Innenraum (29) ein hydrophiles, in diesen eingetragenes Wasser zurückhaltendes Material eingebracht ist.

6. Lichtwellenleiter-Steckverbinder nach einem der vorangehenden Ansprüche, **gekennzeichnet durch** einen zwischen dem Außenraum (9) und dem Innenraum (29) angeordneten, von dem Außenraum (9) **durch** eine weitere Membran (4) abgetrennten Zwischenraum.

## Claims

1. Optical fibre connector with a plugging part provided with at least one optical waveguide contact pin, and an optical waveguide socket part, which is provided with a casing (2) receiving a number of optical waveguide female contacts (7) corresponding to the number of optical waveguide contact pins of the plugging part and a front plate (1) having openings corresponding to the number of optical waveguide female contacts (7) and aligned therewith, in which
- the casing (2) has at least one pressure compensating hole (8) bringing about a pressure compensation between the inner space of the casing (2) and the environment and a membrane (5) bounding a fluid-filled inner space (29) surrounding the optical waveguide female contacts (7) and an outer space (9) communicating with the pressure compensating hole (8) and
- the optical waveguide female contacts (7) have a sealing sleeve (15) adjacent to the opening, a front contact (21), a sliding piston (18) displaceable in the latter and whose diameter corresponds to the optical waveguide contact pin, and a spring (22) biasing the sliding piston (18) in the direction of the opening,
**characterized in that**
the optical waveguide female contacts (7) are provided with
- an outlet valve (17) located in the area between the sealing sleeve (15) and the front optical waveguide contact (21), connecting the space occupied by the sliding piston (6) in the unplugged state to the inner space (29), opening to said inner space (29) on inserting the contact pin in the female contacts (7) and
- an inlet valve (24, 25) located in the area spaced from the opening, connecting the inner space (29) to the space of the optical waveguide female contacts (7) and opening to the inner space (29) on extracting the optical waveguide contact pin from the female contacts (7).

2. Optical fibre connector according to claim 1, **characterized in that** the optical waveguide female contacts (7) are provided with a front optical waveguide contact reception sleeve (18) located between the outlet valve (17) and the front optical waveguide contact carrier (21) and leaving a cleaning annular space between it and the sliding piston (6).

3. Optical fibre connector according to claim 1 or 2, **characterized by** a separating system for separating the fluid from other material located in the path between the inner space (29) and the inlet valve (24, 25).

4. Optical fibre connector according to claim 3, **characterized in that** the separating system is a filter.

5. Optical fibre connector according to claim 3, **characterized in that** a hydrophilic material holding back water which has entered the inner space (29) is located in the latter.

6. Optical fibre connector according to one of the preceding claims, **characterized by** a gap separated by a further membrane (4) from the outer space (9) is positioned between the latter and the,inner space (29).

## Revendications

1. Connecteur enfichable pour guides d'ondes lumineuses comportant une partie mâle ou connecteur, munie d'au moins une broche de contact pour guides d'ondes lumineuses, et une partie femelle ou douille pour guides d'ondes lumineuses, munie d'un boîtier (2) contenant un nombre de douilles de contact pour guides d'ondes lumineuses (7) correspondant au nombre de broches de contact pour guides d'ondes lumineuses de la partie mâle et d'une plaque frontale (1) munie d'ouvertures correspondant au nombre de douilles de contact pour guides d'ondes lumineuses (7), affleurant celles-ci, dans lequel
- le boîtier (2) présente au moins un orifice de compensation de pression (8) produisant une compensation de pression entre l'intérieur du boîtier (2) et l'environnement et une membrane (5) délimitant un volume extérieur (9) communiquant avec l'orifice de compensation de pression (8) par rapport à un volume intérieur (29) rempli de fluide, entourant les douilles de contact pour guides d'ondes lumineuses (7) et
- les douilles de contact pour guides d'ondes lumineuses (7) présentent un manchon d'étanchéité (15) contigu à l'ouverture, un contact frontal ou avant (21), un piston mobile (18) déplaçable dans celui-ci, dont le diamètre correspond à celui de la broche de contact pour guides d'ondes lumineuses, et un ressort (22) chargeant ou sollicitant le piston mobile (18) en direction de l'ouverture,
**caractérisé par le fait que**
les douilles de contact pour guides d'ondes lumineuses (7) sont munies
- d'un clapet de sortie (17) situé dans la zone entre le manchon d'étanchéité (15) et le contact pour guides d'ondes lumineuses avant (21), mettant en communication le volume occupé par le piston mobile (18) à l'état non enfiché avec le volume intérieur (29), s'ouvrant vers le volume intérieur (29) lors de l'introduction de la broche de contact pour guides d'ondes lumineuses dans la douille de contact pour guides d'ondes lumineuses (7), et
- d'un clapet d'entrée (24, 25) situé dans la zone éloignée de l'ouverture, mettant en communication le volume intérieur (29) avec le volume de la douille de contact pour guides d'ondes lumineuses (7), s'ouvrant vers le volume intérieur (29) lors du retrait de la broche de contact pour guides d'ondes lumineuses de la douille de contact pour guides d'ondes lumineuses (7).

2. Connecteur enfichable pour guides d'ondes lumineuses selon la revendication 1, **caractérisé par le fait que** les douilles de contact pour guides d'ondes lumineuses (7) sont munies d'un manchon de réception de contact pour guides d'ondes lumineuses (18) disposé entre le clapet de sortie (17) et le porte-contact pour guides d'ondes lumineuses avant (21), qui laisse un volume annulaire de lavage entre lui et le piston mobile (18).

3. Connecteur enfichable pour guides d'ondes lumineuses selon la revendication 1 ou 2, **caractérisé par** un système de séparation situé dans le chemin entre le volume intérieur (29) et le clapet d'entrée (24, 25), en vue de la séparation du fluide d'autres matières.

4. Connecteur enfichable pour guides d'ondes lumineuses selon la revendication 3, **caractérisé par le fait que** le système de séparation est un filtre.

5. Connecteur enfichable pour guides d'ondes lumineuses selon la revendication 3, **caractérisé par le fait que** l'on place dans le volume intérieur (29) une matière hydrophile, retenant dans celui-ci l'eau qui s'y est infiltrée.

6. Connecteur enfichable pour guides d'ondes lumineuses selon l'une des revendications précédentes, **caractérisé par** un volume intermédiaire situé entre le volume extérieur (9) et le volume intérieur (29), séparé du volume extérieur (9) par une autre membrane (4).
